(19) **Europäisches Patentamt / European Patent Office / Office européen des brevets**

(11) **EP 4 773 310 A1**

(12) **EUROPEAN PATENT APPLICATION**
published in accordance with Art. 153(4) EPC

(43) Date of publication:
08.07.2026 Bulletin 2026/28

(21) Application number: 25797728.0

(22) Date of filing: 29.04.2025

(51) International Patent Classification (IPC):
$H01M\ 10/0569^{(2010.01)}$ $\quad H01M\ 10/0567^{(2010.01)}$
$H01M\ 10/42^{(2006.01)}$ $\quad H01M\ 10/052^{(2010.01)}$
$H01M\ 4/525^{(2010.01)}$ $\quad H01M\ 4/505^{(2010.01)}$
$H01M\ 4/48^{(2010.01)}$ $\quad H01M\ 4/587^{(2010.01)}$
$H01M\ 4/02^{(2006.01)}$

(52) Cooperative Patent Classification (CPC):
H01M 4/02; H01M 4/48; H01M 4/505; H01M 4/525;
H01M 4/587; H01M 10/052; H01M 10/0567;
H01M 10/0569; H01M 10/42; Y02E 60/10

(86) International application number:
PCT/KR2025/005822

(87) International publication number:
WO 2025/230294 (06.11.2025 Gazette 2025/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.04.2024 KR 20240057211
28.04.2025 KR 20250055788

(71) Applicant: LG Energy Solution, Ltd.
Seoul 07335 (KR)

(72) Inventors:
• PARK, Sung Guk
Daejeon 34122 (KR)

• LEE, Chul Haeng
Daejeon 34122 (KR)
• KIM, Min Jung
Daejeon 34122 (KR)
• LEE, Jung Hoon
Daejeon 34122 (KR)
• SEO, Young Mi
Daejeon 34122 (KR)
• KANG, Chang Woo
Daejeon 34122 (KR)
• MOON, Sung Jin
Daejeon 34122 (KR)

(74) Representative: Hoffmann Eitle
Patent- und Rechtsanwälte PartmbB
Arabellastraße 30
81925 München (DE)

(54) **NON-AQUEOUS ELECTROLYTE AND LITHIUM SECONDARY BATTERY COMPRISING SAME**

(57) The present disclosure provides a non-aqueous electrolyte and a lithium secondary battery including the same. The non-aqueous electrolyte of the present disclosure includes a lithium salt; an organic solvent and an additive. The organic solvent includes a first organic solvent and a second organic solvent, the first organic solvent may be $CFH_2CFHCFH_2$, and the second organic solvent may be a cyclic carbonate-based organic solvent.

**FIG. 1**

**Description**

[TECHNICAL FIELD]

CROSS-REFERENCE TO RELATED APPLICATIONS

This application is based on and claims priority from Korean Patent Application No. 10-2024-0057211, filed on April 29, 2024, and Korean Patent Application No. 10-2025-0055788, filed on April 28, 2025, with the Korean Intellectual Property Office, the disclosure of which is incorporated herein in its entirety by reference.

TECHNICAL FIELD

The present disclosure relates to a non-aqueous electrolyte and a lithium secondary battery including the same.

[BACKGROUND]

Recently, as the application areas of the lithium secondary batteries have expanded across a wide range of technologies, including not only power supply for electronic devices such as electric, electronic, communication, and computers, but also power storage for large-area devices such as vehicles and power storage devices, the demand for high-capacity, high-output, and high-stability secondary batteries is increasing.

For example, as the lithium secondary batteries develop to high capacity and high power, the probability of abnormal temperature rise during charging and discharging process is increasing, which may lead to a so-called thermal runaway phenomenon in which a flame explodes at a high temperature, and in the event of thermal runaway, the fire may not be easily extinguished. Thus, safety issues are recognized as one of the more important issues to be resolved in high-capacity, high-output lithium secondary batteries.

[DISCLOSURE OF THE INVENTION]

[TECHNICAL PROBLEM]

The present disclosure provides a non-aqueous electrolyte for a lithium secondary battery, in which decomposition of the non-aqueous electrolyte may be suppressed during the operation of the lithium secondary battery and/or during high-temperature storage, thereby reducing gas generation.

The lithium secondary battery including the non-aqueous electrolyte, according to the present disclosure, provides an improved overall performance because high-temperature cycle characteristics and high-temperature storage characteristics are improved.

[TECHNICAL SOLUTION]

[1] The present disclosure provides a non-aqueous electrolyte comprising a lithium salt, an organic solvent, and an additive, wherein the organic solvent includes a first organic solvent and a second organic solvent, the first organic solvent is $CFH_2CFHCFH_2$, and the second organic solvent is a cyclic carbonate-based organic solvent.

[2] The present disclosure provides the non-aqueous electrolyte of [1] above, wherein the first organic solvent is included in an amount of 5 vol% to 40 vol% relative to the organic solvent as a whole.

[3] The present disclosure provides the non-aqueous electrolyte of [1] or [2] above, wherein the second organic solvent is included in an amount of 5 vol% to 40 vol% relative to the organic solvent as a whole.

[4] The present disclosure provides the non-aqueous electrolyte of at least one of [1] to [3] above, wherein the cyclic carbonate-based organic solvent is ethylene carbonate or propylene carbonate.

[5] The present disclosure provides a non-aqueous electrolyte of at least one of [1] to [4] above, wherein the organic solvent further includes a third organic solvent, and the third organic solvent is a linear carbonate-based organic solvent.

[6] The present disclosure provides a non-aqueous electrolyte of at least one of [1] to [5] above, wherein the linear carbonate-based organic solvent is at least one type selected from dimethyl carbonate, diethyl carbonate, and ethylmethyl carbonate.

[7] The present disclosure provides the non-aqueous electrolyte of at least one of [1] to [6] above, wherein the lithium salt includes $LiPF_6$.

[8] The present disclosure provides the non-aqueous electrolyte of at least one of [1] to [7] above, wherein the additive is at least one selected from a cyclic carbonate-based compound, a halogen substituted carbonate-based compound, a sultone-based compound, a sulfate-based compound, a phosphate-based compound, a borate-based compound, a nitrile-based compound, a benzene-based compound, an amine-based compound, a silane-based compound and a lithium salt-based compound.

[9] The present disclosure provides the non-aqueous electrolyte of at least one of [1] to [8] above, wherein the additive additionally includes a combination of vinylene carbonate (VC), 1,3-propane sultone (PS), and 1,3-propene sultone (PRS).

[10] The present disclosure provides a lithium secondary battery comprising: a positive electrode; a negative electrode facing the positive electrode; a separator interposed between the positive electrode and the negative electrode; and the non-aqueous electrolyte according to the above [1].

[11] The present disclosure provides the lithium secondary battery of [10] above, wherein the positive electrode includes lithium nickel cobalt manganese-based oxide as a positive electrode active material.

[12] The present disclosure provides the lithium secondary battery of [10] or [11] above, wherein the negative electrode includes $SiOx$ ($0<x<2$) or $SiC$ as a negative electrode active material.

[13] The present disclosure provides a method of manufacturing a non-aqueous electrolyte that includes a lithium salt, an organic solvent and an additive, the method comprising: preparing the organic solvent with a first organic solvent and a second organic solvent, wherein the first organic solvent uses $CFH_2CFHCFH_2$, and the second organic solvent uses a cyclic carbonate-based organic solvent.

[14] The present disclosure provides a method of manufacturing a non-aqueous electrolyte of [13] above, wherein the first organic solvent is included in an amount of 5 vol% to 40 vol% relative to the organic solvent as a whole.

[15] The present disclosure provides a method of manufacturing a non-aqueous electrolyte of [13] or [14] above, wherein the second organic solvent is included in an amount of 5 vol% to 40 vol% relative to the organic solvent as a whole.

[16] The present disclosure provides a method of manufacturing a non-aqueous electrolyte of at least one of [13 to [15] above, wherein the cyclic carbonate-based organic solvent uses ethylene carbonate or propylene carbonate.

[17] The present disclosure provides a method of manufacturing a non-aqueous electrolyte of at least one of [13 to [16] above, wherein the organic solvent further includes a third organic solvent, and the third organic solvent uses a linear carbonate-based organic solvent.

[18] The present disclosure provides a method of manufacturing a non-aqueous electrolyte of at least one of [13 to [17] above, wherein as for the linear carbonate-based organic solvent, at least one type is selected from dimethyl carbonate, diethyl carbonate, and ethyl methyl carbonate.

[ADVANTAGEOUS EFFECTS]

The non-aqueous electrolyte of the present disclosure contains $CFH_2CFHCFH_2$ as a co-solvent together with a cyclic carbonate solvent having a high lithium transportability, and thus, there is an effect of suppressing decomposition of the cyclic carbonate solvent and decomposition of $CFH_2CFHCFH_2$ itself. Accordingly, it is possible to reduce the gas generation occurring due to side reactions of the electrolyte during the operation of the lithium secondary battery. Also, since the non-aqueous electrolyte of the present disclosure contains $CFH_2CFHCFH_2$ as the co-solvent together with the cyclic carbonate solvent, high ion conductivity of the electrolyte is maintained, thereby providing an excellent effect in improving output characteristics. Also, when the non-aqueous electrolyte of the present disclosure is used, the electrolyte side reactions may be suppressed at a negative electrode, thereby suppressing cell deterioration.

Therefore, the lithium secondary battery of the present disclosure has an effect in which the overall performance is not deteriorated even if the battery is driven while being exposed to high voltages and high temperatures for an extended period of time.

[BRIEF DESCRIPTION OF THE DRAWINGS]

The following drawings attached hereto illustrate example embodiments of the present disclosure and, together with the detailed description to be described later, serve to further understand the technical idea of the present disclosure. Therefore, the present disclosure should not be construed as being limited to the matters illustrated in the drawings.

FIG. 1 illustrates the structure of a lithium secondary battery according to one embodiment of the present disclosure.
FIG. 2 is a view for explaining a vehicle including a battery pack composed of lithium secondary batteries of FIG. 1.

In some of the attached drawings, corresponding components are given the same reference numerals. Those skilled in the art would appreciate that the drawings depict elements simply and clearly and have not necessarily been drawn to scale. For example, in order to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

**Description of the Symbols**

10: Pouch Type Secondary Battery
20: Elastic Band
22a, 22b, 22c: Scratch-Inducing Chips
30: Explosion-Prevention Member

[DETAILED DESCRIPTION]

It should be noted that the terms or words used in this specification and claims should not be interpreted as limited to their usual or dictionary meanings, and should be interpreted as meanings and concepts that conform to the technical idea of the present disclosure based on the principle that the inventors can appropriately define the concept of the term in order to explain their own invention in the best manner.

It should be understood that the terms "comprise," "include," or "have" are intended to specify the presence of a feature, number, step, component, or combination thereof, but do not exclude in advance the possibility of the presence or addition of one or more other features, numbers, steps, components, or combinations thereof.

Also, in the description of "a to b carbon atoms" in this specification, "a" and "b" mean the number of carbon atoms included in a specific functional group. That is, the functional group may include "a" to "b" carbon atoms. For example, "an alkylene group with 1 to 5 carbon atoms" means an alkylene group including 1 to 5 carbon atoms, such as $-CH_2-$, $-CH_2CH_2-$, $-CH_2CH_2CH_2-$, $-CH_2(CH_3)CH-$, $-CH(CH_3)CH_2-$ or $-CH(CH_3)CH_2CH_2-$.

Also, all alkyl groups in the present specification may be substituted or unsubstituted. Unless otherwise defined, the above "substitution" means that at least one hydrogen bonded to carbon is substituted with an element other than hydrogen, for example, a halogen atom, a nitro group, or a nitrile group.

Among various applications of lithium secondary batteries, for example, in lithium secondary batteries used for application for automobiles, high-capacity, high-output, and long-life characteristics are becoming important. In general, as an electrolyte organic solvent for providing high-output lithium secondary batteries, a linear carbonate-based organic solvent having a low viscosity and a low dielectric constant is selected together with a cyclic carbonate-based organic solvent having a high dielectric constant but having a high viscosity.

However, the linear carbonate-based organic solvent is easily reduced and decomposed at a negative electrode, thereby generating hydrocarbon gas, and may cause a lot of side reactions at the negative electrode. This may cause problems such as deterioration in the performance and stability of a lithium secondary battery containing the solvent.

Such a deterioration phenomenon of secondary batteries tends to be further accelerated when the potential of a positive electrode increases or when the battery is exposed to high temperatures.

In view of this point, the present disclosure proposes a technology capable of reducing a swelling phenomenon of lithium secondary batteries, and increasing the stability at high temperatures.

Hereinafter, the present disclosure will be described in more detail.

The non-aqueous electrolyte, lithium secondary battery comprising the same and/or a method of manufacturing a non-aqueous electrolyte according to the present disclosure may include at least one of the constitutions disclosed below, and may include any combination between technically possible constitutions among the following constitutions.

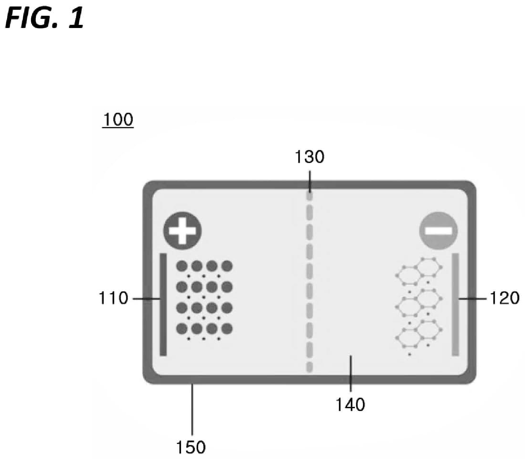

Referring to FIG. 1, a lithium secondary battery 100 according to one embodiment of the present disclosure includes an electrode assembly, a non-aqueous electrolyte 140, and a battery housing 150. The electrode assembly is composed of a positive electrode 110, a negative electrode 120 facing the positive electrode 110, and a separator 130 interposed between the positive electrode 110 and the negative electrode 120. The battery housing 150 accommodates the electrode assembly and the non-aqueous electrolyte 140.

The lithium secondary battery 100 may be manufactured by storing the electrode assembly in the battery housing 150, and then injecting the above-described non-aqueous electrolyte 140.

The lithium secondary battery 100 according to one embodiment of the present disclosure may be manufactured as, for example, a prismatic type, a pouch type, a coin type or a cylindrical type depending on the manufacturing form.

**Non-Aqueous Electrolyte**

The non-aqueous electrolyte 140 according to one embodiment of the present disclosure includes a lithium salt; an organic solvent and an additive. Here, the organic solvent includes a first organic solvent and a second organic solvent, the first organic solvent is $CFH_2CFHCFH_2$, and the second organic solvent is a cyclic carbonate-based organic solvent.

**(1) Lithium Salt**

The lithium salt included in the non-aqueous electrolyte 140 of the present disclosure is generally used as an electrolyte salt in the lithium secondary battery 100 and is used as a medium for transferring ions.

The lithium salt used in the present disclosure contains, for example, $Li^+$ as a cation, and may contain, as an anion, at least one selected from $F^-$, $Cl^-$, $Br^-$, $I^-$, $NO_3^-$, $N(CN)_2^-$, $BF_4^-$, $ClO_4^-$, $AlO_2^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4PO_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$. For example, the lithium salt may include a single material selected from LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (Lithium bis(fluorosulfonyl) imide, $LiN(SO_2F)_2$), LiBETI (lithium bis(perfluoroethanesulfonyl) imide, $LiN(SO_2CF_2CF_3)_2$, and LiTFSI (lithium bis(trifluoromethanesulfonyl) imide, and $LiN(SO_2CF_3)_2$), or a mixture of two or more types. According to one embodiment, the lithium salt may include $LiPF_6$.

The lithium salt may be appropriately changed within a generally usable range, but may be included in the electrolyte at a concentration of 0.1 M to 3.0 M, for example, a concentration of 0.5 M to 3.0 M or a concentration of 1.0 M to 2.0 M in order to obtain an optimal film-forming effect for preventing the electrode surface corrosion. When the concentration of the lithium salt satisfies the above range, the effect of improving cycle characteristics during high-temperature storage of the lithium secondary battery is sufficient, and the viscosity of the non-aqueous electrolyte 140 is appropriate, so that the electrolyte impregnation property may be improved.

**(2) Organic Solvent**

**(2-1) First Organic Solvent**

The non-aqueous electrolyte 140 according to one embodiment of the present disclosure includes $CFH_2CFHCFH_2$ as the first organic solvent.

The $CFH_2CFHCFH_2$ is less likely to be decomposed by itself even at high temperatures and high potentials compared to 1,1,1-trifluoropropane or 1,1,2-trifluoropropane due to fluorine (F) functional group structures uniformly distributed within the structure, and has an effect of stabilizing the cyclic carbonate-based organic solvent by an action mechanism of further binding Li cations with the cyclic carbonate-based organic solvent. Therefore, the decomposition of the cyclic carbonate-based organic solvent that is the second organic solvent to be described below can be effectively suppressed. Accordingly, the lithium secondary battery including the non-aqueous electrolyte of the present disclosure, which contains $CFH_2CFHCFH_2$ as the first organic solvent, may effectively reduce the gas generation occurring due to the side reactions of electrolyte during the operation.

The first organic solvent may be included in an amount of about 5 vol% or more or about 10 vol% or more relative to the entire organic solvent. For example, the first organic solvent may be included in an amount of about 15 vol% or more. Also, the first organic solvent may be included in an amount of about 40 vol% or less, or about 30 vol% or less relative to the entire organic solvent. According to one embodiment, the first organic solvent may be included in an amount of about 25 vol% or less. When the content of the first organic solvent satisfies the above range, there is an effect of improving the high temperature durability of the cell while maintaining the high ion conductivity.

**(2-2) Second Organic Solvent**

The non-aqueous electrolyte 140 of the present disclosure includes the cyclic carbonate-based organic solvent as the second organic solvent. The cyclic carbonate-based organic solvent is a high-viscosity organic solvent and has a high dielectric constant, so that the lithium salt in the electrolyte may be easily dissociated, thereby improving the output characteristics of the lithium secondary battery 100. As for the cyclic carbonate, for example, at least one organic solvent selected from ethylene carbonate (EC), propylene carbonate (PC), fluoroethylene carbonate (FEC), 1,2-butylene carbonate, 2,3-butylene carbonate, 1,2-pentylene carbonate, and 2,3-pentylene carbonate may be included. According to one embodiment, among these, ethylene carbonate (EC) may be used in terms of stably forming a film and exhibiting relatively high ion conductivity.

The second organic solvent may be included in an amount of about 5 vol% or more or about 10 vol% or more relative to the entire organic solvent. For example, the second organic solvent may be included in an amount of about 15 vol% or more. Also, the second organic solvent may be included in an amount of about 40 vol% or less, or about 35 vol% or less relative to the entire organic solvent. For example, the second organic solvent may be included in an amount of about 30 vol% or less. When the content of the second organic solvent satisfies the above range, there is an effect of improving the high temperature durability of the cell while maintaining the high ion conductivity.

Meanwhile, the ratio of the volume of the first organic solvent, $CFH_2CFHCFH_2$, to the volume of the second organic solvent, the cyclic carbonate-based organic solvent, may be about 0.16 to 2.0. Within the above range, while the viscosity of the organic solvent is appropriately adjusted, the effect of reducing gas generation may be significantly improved.

For example, the ratio of the volume of the first organic solvent, $CFH_2CFHCFH_2$, to the volume of the second organic solvent, the cyclic carbonate-based organic solvent, may be about 0.16 or more, 0.2 or more, about 0.3 or more, about 0.4 or more or about 0.6 or more. The ratio of the volume of the first organic solvent, $CFH_2CFHCFH_2$, to the volume of the second organic solvent, the cyclic carbonate-based organic solvent, may be about 2.0 or less, 1.9 or less, about 1.8 or less, about 1.7 or less, about 1.6 or less, about 1.5 or less or about 1.3 or less. The above numerical ranges may be combined with each other without limitation. For example, the ratio of the volume of the first organic solvent, $CFH_2CFHCFH_2$, to the volume of the second organic solvent, the cyclic carbonate-based organic solvent, may be about 0.16 to 2.0, about 0.3 to 1.8, about 0.6 to 1.6, or about 0.6 to 1.3. Within the above range, the viscosity of the organic solvent is appropriately secured, and the ion conductivity of the lithium salt may be improved. Moreover, the combination of these organic solvent components may minimize gas generation caused by decomposition of the cyclic carbonate-based organic solvent, prevent or suppress the destruction of an SEI film on the surface of a negative electrode active material, and improve the oxidation stability, chemical stability and electrochemical stability of the non-aqueous electrolyte.

### (2-3) Third Organic Solvent

The non-aqueous electrolyte according to one embodiment of the present disclosure may further include a third organic solvent.

According to one embodiment, as for the third organic solvent, a linear carbonate-based organic solvent may be included. The linear carbonate-based organic solvent is an organic solvent having a low viscosity and a low dielectric constant, and as for a representative example, at least one organic solvent selected from dimethyl carbonate (DMC), diethyl carbonate (DEC), dipropyl carbonate, ethyl methyl carbonate (EMC), methyl propyl carbonate and ethyl propyl carbonate may be used. For example, at least one selected from dimethyl carbonate, diethyl carbonate (DEC), and ethyl methyl carbonate may be included, or at least one of dimethyl carbonate and ethyl methyl carbonate may be included.

When the organic solvent further includes the linear carbonate-based organic solvent as the third organic solvent, the ratio of the volume of the first organic solvent, $CFH_2CFHCFH_2$, to the volume of the third organic solvent, the linear carbonate-based organic solvent, may be about 0.07 or more, 0.10 or more, 0.16 or more, 0.20 or more, 0.25 or more, 0.30 or more, or about 0.40 or more. The ratio of the volume of the first organic solvent, $CFH_2CFHCFH_2$, to the volume of the third organic solvent, the linear carbonate-based organic solvent, may be about 6.0 or less, 5.0 or less, 4.0 or less, 3.0 or less, 2.0 or less or about 1.5 or less. The above numerical ranges may be combined with each other without limitation. According to one embodiment, the ratio of the volume of the first organic solvent, $CFH_2CFHCFH_2$, to the volume of the third organic solvent, the linear carbonate-based organic solvent, may be about 0.07 to 6.0, about 0.10 to 5.0, about 0.20 to 4.0, or about 0.3 to 2.0. Within the above range, it is possible to implement the non-aqueous electrolyte 140 having excellent oxidation stability while appropriately adjusting the viscosity of the organic solvent.

Also, in order to produce an electrolyte having high ion conductivity by the third organic solvent, at least one ester-based organic solvent selected from a linear ester-based organic solvent and a cyclic ester-based organic solvent may be additionally included.

The linear ester-based organic solvent may include, for example, at least one organic solvent selected from methyl acetate, ethyl acetate, propyl acetate, methyl propionate, ethyl propionate, propyl propionate, and butyl propionate.

Also, the cyclic ester-based organic solvent may include at least one organic solvent selected from γ-butyrolactone, γ-valerolactone, γ-caprolactone, σ-valerolactone, and ε-caprolactone.

Also, in the non-aqueous electrolyte 140 of the present disclosure, as necessary, an organic solvent generally used for the non-aqueous electrolyte 140 may be added and used as the third organic solvent without limitation. For example, at least one organic solvent among an ether-based organic solvent, a glyme-based organic solvent, and a nitrile-based organic solvent may be additionally included.

As for the ether-based organic solvent, any one selected from dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more types thereof may be used, but the present disclosure is not limited thereto.

The glyme-based organic solvent is a solvent that has a high dielectric constant, a low surface tension, and a low reactivity with metals compared to the linear carbonate-based organic solvent, and may include at least one selected from dimethoxyethane (glyme, DME), diethoxyethane, diglyme (diglyme), tri-glyme (Triglyme), and tetra-glyme (TEGDME), but the present disclosure is not limited thereto.

The nitrile-based organic solvent may be at least one type selected from acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

Meanwhile, in the organic solvent included in the non-aqueous electrolyte 140 of the present disclosure, the remainder of the organic solvent, excluding the first organic solvent and the second organic solvent, may include only the third organic solvent unless otherwise stated.

### (3) Additive

The non-aqueous electrolyte 140 may further include an additive together with the above-described lithium salt and organic solvent.

As for the additive, an additive capable of forming an SEI film may be additionally included in the non-aqueous electrolyte 140 if necessary in order to prevent the non-aqueous electrolyte 140 of the lithium secondary battery 100 from being decomposed and causing the collapse of the negative electrode in a high-power environment, or to further improve low-temperature high-rate discharge characteristics, high-temperature stability, overcharge prevention, and high-temperature battery expansion suppression effects.

The additive may include, as a representative example, at least one additive selected from cyclic carbonate-based compounds, halogen substituted carbonate-based compounds, sultone-based compounds, sulfate-based compounds, phosphate-based compounds, borate-based compounds, nitrile-based compounds, benzene-based compounds, amine-based compounds, silane-based compounds, and lithium salt-based compounds, may include, for example, at least one additive selected from cyclic carbonate-based compounds, sultone-based compounds, and sulfate-based compounds, or may include a cyclic carbonate-based compound.

According to one embodiment, the cyclic carbonate-based compound may include vinylene carbonate (VC) or vinylethylene carbonate.

According to one embodiment, the halogen substituted carbonate-based compound may include fluoroethylene carbonate.

The sultone-based compound may include at least one compound selected from 1,3-propane sultone (PS), 1,4-butane sultone, ethene sultone, 1,3-propene sultone (PRS), 1,4-butene sultone, and 1-methyl-1,3-propene sultone.

The sulfate-based compound may include ethylene sulfate (Esa), trimethylene sulfate (TMS), or methyl trimethylene sulfate (MTMS).

The phosphate-based compound may include at least one type of compound selected from lithium difluoro(bisoxalato)phosphate, lithium difluorophosphate, tris(trimethyl silyl) phosphate, tris(trimethyl silyl) phosphite, tris(2,2,2-trifluoroethyl)phosphate, and tris(2,2,2-trifluoroethyl) phosphite.

The borate-based compound may include tetraphenylborate, lithium oxalyldifluoroborate (LiODFB), or lithium bisoxalatoborate (LiB(C_2O_4)_2, LiBOB).

The nitrile-based compound may include at least one compound selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylene diamine, and the silane-based compound may include tetravinylsilane.

The lithium salt-based compound is a compound different from the lithium salt included in the non-aqueous electrolyte, and may include lithium difluorophosphate (LiDFP), LiPO_2F_2, or LiBF_4.

The additive may be at least one type selected from vinylene carbonate (VC), vinyl ethylene carbonate (VEC) and propane sultone (PS), ethene sultone, 1,3-propene sultone (PRS), ethylene sulfate, lithium difluoro(bisoxalato)phosphate, and lithium difluorophosphate, and may include vinylene carbonate (VC) according to one embodiment. Also, when a combination of vinylene carbonate (VC), 1,3-propane sultone (PS), and 1,3-propene sultone (PRS) is additionally included as the additive, a more solid SEI film may be formed on the surface of the negative electrode during the initial activation process of the secondary battery. Then, it is possible to suppress gas generation that may occur due to decomposition of the electrolyte at high temperatures, thereby improving the high-temperature stability of the lithium secondary battery 100 according to one embodiment of the present disclosure.

Meanwhile, among the additives, two or more types may be mixed for use, and may be included in an amount of about 0.1 wt% or more, for example, about 0.2 wt% or more, or about 0.5 wt% or more relative to the total weight of the non-aqueous electrolyte, and may also be included in an amount of about 10 wt% or less, about 8 wt% or less, or about 5 wt% or less. When the content of the above additives satisfies the above range, the effect of improving ion conductivity and cycle characteristics is more excellent.

## Lithium Secondary Battery

According to one embodiment, the present disclosure provides the lithium secondary battery 100 including the above-described non-aqueous electrolyte 140.

The lithium secondary battery 100 according to the present disclosure includes: the positive electrode 110; the negative electrode 120 facing the positive electrode 110; the separator 130 interposed between the positive electrode 110 and the negative electrode 120; and the above-described non-aqueous electrolyte 140.

According to one embodiment, the lithium secondary battery 100 may be manufactured by storing an electrode assembly in the battery housing 150, and then injecting the above-described non-aqueous electrolyte 140. The electrode assembly includes the positive electrode 110; the negative electrode 120 facing the positive electrode 110; and the separator 130 interposed between the positive electrode 110 and the negative electrode 120. Here, as described above, the lithium secondary battery 100 according to one embodiment of the present disclosure may be manufactured as, for example, a prismatic type, a pouch type, a coin type, or a cylindrical type depending on the manufacturing form.

Following the above-described non-aqueous electrolyte 140, hereinafter, the positive electrode 110, the negative electrode 120 and the separator 130 will be described.

## (1) Positive Electrode

The positive electrode 110 may include a positive electrode active material.

The positive electrode active material may include a lithium nickel cobalt manganese-based oxide having a high nickel content as the positive electrode active material so as to increase the energy density. For example, the lithium nickel cobalt manganese-based oxide may have a composition represented by the following Formula 2.

$$[\text{Formula 2}] \qquad Li_xNi_aCo_bM1_dM2_dO_2$$

In the above formula 2, $M^1$ may be Mn or a combination of Mn and Al, or may be a combination of Mn and Al from the viewpoint of enhancing the structural stability.

$M^2$ may be at least one type selected from Zr, W, Y, Ba, Ca, Ti, Mg, Ta and Nb.

The symbol "x" represents the atomic fraction of lithium in the lithium nickel cobalt manganese-based oxide, and may be in the range of about $0.90 \leq x \leq 1.1$, about $0.95 \leq x \leq 1.08$, or about $1.0 \leq x \leq 1.08$.

The symbol "a" represents the atomic fraction of nickel among the metal elements in the lithium nickel cobalt manganese-based oxide, excluding lithium, and may be in the range of about $0.80 \leq a < 1.0$, about $0.80 \leq a \leq 0.95$, or about $0.80 \leq a \leq 0.90$. When the nickel content satisfies the above range, high-capacity characteristics may be implemented.

The symbol "b" represents the atomic fraction of cobalt among the metal elements in the lithium nickel cobalt manganese-based oxide, excluding lithium, and may be in the range of about $0 < b < 0.2$, about $0 < b \leq 0.15$, or about $0.01 \leq b \leq 0.10$.

The symbol "c" represents the atomic fraction of $M^1$ among the metal elements in the lithium nickel cobalt manganese-based oxide, excluding lithium, and may be in the range of about $0 < c < 0.2$, $0 < c \leq 0.15$, or about $0.01 \leq c \leq 0.10$.

The symbol "d" represents the atomic fraction of $M^2$ among the metal elements in the lithium nickel cobalt manganese-based oxide, excluding lithium, and may be in the range of about $0 \leq d \leq 0.1$, or about $0 \leq d \leq 0.05$.

The positive electrode active material may be included in an amount of about 60 wt% to 99 wt%, 70 wt% to 99 wt%, or about 80 wt% to 98 wt% relative to the total weight of solids except for a solvent, in a positive electrode slurry mixture.

The positive electrode 110 may include a positive electrode current collector; and a positive electrode active material layer disposed on at least one surface of the positive electrode current collector. Here, the positive electrode active material layer may include the above-described positive electrode active material.

The thickness of the positive electrode current collector may be generally a thickness of about 3 $\mu$m to 500 $\mu$m.

The positive electrode current collector is not particularly limited as long as it has conductivity without causing a chemical change in the corresponding battery. For example, stainless steel, aluminum, nickel, titanium, calcined carbon, or aluminum or stainless steel surface-treated with carbon, nickel, titanium, silver, etc. may be used.

Also, by forming fine irregularities on the surface of the positive electrode current collector, it is also possible to enhance the bonding strength of the positive electrode active material. For example, the positive electrode current collector may be used in various forms such as a film, a sheet, a foil, a net, a porous body, a foam, and a nonwoven fabric.

The positive electrode active material layer is disposed on at least one surface of the positive electrode current collector. For example, the positive electrode active material layer may be disposed on one surface or both surfaces of the positive electrode current collector.

The positive electrode active material may be included in an amount of about 80 wt% to about 99 wt% in the positive electrode active material layer in consideration of sufficient capacity exertion, and the like, of the positive electrode active material.

The positive electrode active material layer may further include a binder and/or a conductive material together with the above-described positive electrode active material.

The binder is a component that performs a role of improving the adhesion between positive electrode active material particles and the adhesive strength between the positive electrode active material and the current collector. Examples thereof may include: a fluorine resin-based binder including polyvinylidene fluoride (PVDF) or polytetrafluoroethylene (PTFE); a rubber-based binder including styrene butadiene rubber (SBR), acrylonitrile-butadiene rubber, and styrene-isoprene rubber; a cellulose-based binder including carboxymethylcellulose (CMC), starch, hydroxypropyl cellulose, and regenerated cellulose; a polyalcohol-based binder including polyvinyl alcohol; a polyolefin-based binder including polyethylene, and polypropylene; a polyimide-based binder; a polyester-based binder; and a silane-based binder.

In general, the binder may be included in an amount of about 0.1 wt% to 20 wt%, for example, about 0.5 wt% to 15 wt%, or about 1 wt% to 10 wt% in the positive electrode active material layer.

Next, the conductive material is a component for further improving the conductivity of the positive electrode active material, and is not particularly limited as long as it has conductivity without causing a chemical change in the corresponding battery. For example, carbon powder such as carbon black, acetylene black, Ketjen black, channel black, furnace black, lamp black, or thermal black; graphite powder such as natural graphite, artificial graphite, or graphite with a highly developed crystal structure; conductive fibers such as carbon fibers or metal fibers; fluorinated carbon powder; conductive powder such as aluminum powder or nickel powder; conductive whiskers such as zinc oxide or potassium titanate; conductive metal oxides such as titanium oxide; and conductive materials such as polyphenylene derivatives may be used.

The conductive material may be included in an amount of about 1 wt% to 20 wt%, about 1 wt% to 15 wt%, or about 1 wt% to 10 wt%, in the positive electrode active material layer.

According to one embodiment, the positive electrode may be manufactured by coating a positive electrode slurry on the positive electrode current collector and then performing drying and roll-pressing. The positive electrode slurry includes the positive electrode active material and optionally the binder, the conductive material, and a solvent for forming the positive electrode slurry. Alternatively, a film may be manufactured by mixing the positive electrode active material and optionally the binder, the conductive material, etc. and then may be laminated on the positive electrode current collector so as to manufacture the positive electrode.

The solvent for forming the positive electrode slurry may include at least one type selected from N-methyl pyrrolidone, ethanol, methanol, and isopropyl alcohol in terms of facilitating dispersion of the positive electrode active material, the binder and/or the conductive material, and may include N-methyl pyrrolidone according to one embodiment.

The solvent may be used in such an amount that an appropriate viscosity is obtained when the positive electrode active material, and optionally the binder, the conductive material, etc. are included. For example, the solvent may be included such that the concentration of solids including the positive electrode active material, and optionally the binder and the conductive material becomes about 50 wt% to 95 wt%, about 70 wt% to 95 wt%, or about 70 wt% to 90 wt%.

**(2) Negative Electrode**

Next, the negative electrode 120 will be described.

The negative electrode 120 may include a negative electrode active material.

According to one embodiment, as for the negative electrode active material, a carbon-based active material, a silicon-based active material, or a mixture of the carbon-based active material and the silicon-based active material may be used.

As for the carbon-based active material, various carbon-based active materials used in the art, for example, graphite-based materials such as natural graphite, artificial graphite, and Kish graphite; high-temperature calcined carbon such as pyrolytic carbon, mesophase pitch-based carbon fiber, meso-carbon microbeads, mesophase pitches and petroleum or coal tar pitch-derived cokes, soft carbon, hard carbon, etc. may be used. The shape of the carbon-based active material is not particularly limited, and materials having various shapes such as an amorphous shape, a plate shape, a scaly shape, a spherical shape, or a fiber shape may be used.

According to one embodiment, as for the carbon-based active material, either natural graphite or artificial graphite may be used, and both natural graphite and artificial graphite may also be used so as to increase the adhesive strength with the current collector and to suppress the desorption of the active material.

Also, the silicon-based active material may include, for example at least one type selected from metal silicon (Si), silicon oxide ($SiO_x$, where $0<x<2$), silicon carbide (SiC), and a Si-Y alloy (Y is an element selected from alkali metals, alkaline earth metals, Group 13 elements, Group 14 elements, transition metals, rare earth elements, and combinations thereof, and is not Si). The element Y may be selected from Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

The average particle size ($D_{50}$) of the silicon-based active material may be about 1 $\mu$m to 30 $\mu$m, or about 2 $\mu$m to 15 $\mu$m in terms of reducing side reactions with the electrolyte while ensuring structural stability during charging/discharging.

Also, the negative electrode 120 of the present disclosure may include at least one type selected from the carbon-based active material and the silicon-based active material.

According to one embodiment, the negative electrode 120 of the present disclosure may include the carbon-based active material and the silicon-based active material.

Here, the weight ratio of the silicon-based active material to the carbon-based active material may be about 1:99 to 30:70, or about 3:97 to 15:85. When the mixing ratio of the silicon-based active material and the carbon-based active material satisfies the above range, the capacity characteristics may be improved while the volume expansion of the silicon-based active material may be suppressed, thereby ensuring an excellent cycle performance.

The negative electrode 120 may include a negative electrode current collector; and a negative electrode composite layer disposed on at least one surface of the negative electrode current collector. Here, the negative electrode active material may be included in the negative electrode composite layer.

The negative electrode current collector is not particularly limited as long as it has high conductivity without causing a chemical change in the corresponding battery. For example, copper, stainless steel, aluminum, nickel, titanium, calcined carbon, copper or stainless steel surface-treated with carbon, nickel, titanium, silver, etc., and an aluminum-cadmium alloy may be used. Also, as in the positive electrode current collector, by forming fine irregularities on the surface, it is also possible to enhance the bonding strength of the negative electrode active material. The negative electrode current collector may be used in various forms such as a film, a sheet, a foil, a net, a porous body, a foam, and a nonwoven fabric.

The negative electrode current collector may generally have a thickness of about 3 $\mu$m to 500 $\mu$m.

The negative electrode composite layer is disposed on at least one surface of the negative electrode current collector. For example, the negative electrode composite layer may be disposed on one surface or both surfaces of the negative electrode current collector.

The negative electrode active material may be included in an amount of about 60 wt% to 99 wt% in the negative electrode composite layer in terms of sufficiently expressing the capacity in the secondary battery while minimizing the effect of volume expansion/contraction on the battery.

The negative electrode composite layer may further include a binder and/or a conductive material together with the negative electrode active material.

The binder is a component that assists in binding between the conductive material, the active material, and the current collector. Examples of this binder may include: a fluorine resin-based binder such as polyvinylidene fluoride (PVDF); a rubber-based binder including styrene butadiene rubber (SBR), acrylonitrile-butadiene rubber, and styrene-isoprene rubber; a cellulose-based binder including carboxy methyl cellulose (CMC), starch, hydroxy propyl cellulose, and regenerated cellulose; a polyalcohol-based binder including polyvinyl alcohol; a polyolefin-based binder including polyethylene and polypropylene; a polyimidazole-based binder; a polyester-based binder; and a silane-based binder.

The binder may be included in an amount of about 0.1 wt% to 20 wt%, for example, about 0.5 wt% to 15 wt%, or about 1 wt% to 10 wt% within the negative electrode composite layer.

The conductive material is a component for further improving the conductivity of the negative electrode active material, and may be added in an amount of about 1 wt% to 20 wt% relative to the total weight of solids, in a negative electrode slurry mixture. Such a conductive material is not particularly limited as long as it has conductivity without causing a chemical change in the corresponding battery. For example, carbon powder such as carbon black, acetylene black, Ketjen black, channel black, furnace black, lamp black, or thermal black; graphite powder such as natural graphite, artificial graphite, or graphite with a highly developed crystal structure; conductive fibers such as carbon fibers or metal fibers; fluorinated carbon powder; conductive powder such as aluminum powder or nickel powder; conductive whiskers such as zinc oxide or potassium titanate; conductive metal oxides such as titanium oxide; and conductive materials such as polyphenylene derivatives may be used.

The conductive material may be included in an amount of about 1 wt% to 20 wt%, for example, about 1 wt% to 15 wt%, or about 1 wt% to 10 wt% in the negative electrode composite layer.

The negative electrode 120 may be manufactured by coating a negative electrode slurry on the negative electrode current collector, and then performing drying and roll-pressing. The negative electrode slurry includes the negative electrode active material and optionally the binder, the conductive material, and a solvent for forming the negative electrode slurry. Alternatively, a film may be manufactured by mixing the negative electrode active material and optionally the binder, the conductive material, etc. and then may be laminated on the negative electrode current collector so as to manufacture the negative electrode 120.

The solvent for forming the negative electrode slurry may include at least one type selected from distilled water, N-methyl pyrrolidone, ethanol, methanol, and isopropyl alcohol, for example, distilled water, in terms of facilitating dispersion of, for example, the negative electrode active material, the binder and/or the conductive material.

The solvent may be used in such an amount that an appropriate viscosity is obtained when the negative electrode active material, and optionally, the binder, the conductive material, etc. are included. For example, the solvent may be included such that the concentration of solids including the negative electrode active material, and optionally the binder and the conductive material becomes about 50 wt% to 95 wt%, or about 70 wt% to 90 wt%.

### (3) Separator

As for the separator 130 that may be included in the lithium secondary battery 100 of the present disclosure, general porous polymer films that have conventionally been used as separators. For example, porous polymer films made of polyolefin-based polymers such as ethylene homopolymer, propylene homopolymer, ethylene/butene copolymer, ethylene/hexene copolymer and ethylene/methacrylate copolymer, may be used singly or in a laminated manner, or a conventional porous nonwoven fabric, for example, a nonwoven fabric made of high-melting-point glass fiber, polyethylene terephthalate fiber, and the like, may be used, but the present disclosure is not limited thereto. Also, a coated separator containing ceramic components or polymer materials may also be used to secure heat resistance or mechanical strength, and may be optionally used in a single-layer or a multi-layer structure.

The external shape of the lithium secondary battery 100 of the present disclosure is not particularly limited, but may be a cylindrical shape using a can, a prismatic shape, a pouch shape or a coin shape.

Hereinafter, the present disclosure will be described through Examples. However, the following examples are merely examples for helping understanding of the present disclosure, and do not limit the scope of the present disclosure. It is obvious to those skilled in the art that various changes and modifications are possible within the scope of this description and the scope of the technical idea, and it is natural that these changes and modifications fall within the accompanying claims.

### Examples and Comparative Examples

### Example 1.

### (Production of Non-Aqueous Electrolyte)

The LiPF$_6$ was dissolved to 1.0 M in an organic solvent obtained by mixing ethylene carbonate (EC), CFH$_2$CFCFH$_2$, and ethyl methyl carbonate (EMC) at a volume ratio of 30:20:50, and then vinylene carbonate (VC) as an additive was added to 0.5 wt% to prepare a non-aqueous electrolyte (see Table 1 below).

### (Manufacturing of Secondary Battery)

A positive electrode active material (Li(Ni$_{0.9}$Mn$_{0.03}$Co$_{0.06}$Al$_{0.01}$)O$_2$), a conductive material (carbon black), and a binder (polyvinylidene fluoride) were added at a weight ratio of 97.6:0.8:1.6 to N-methyl-2-pyrrolidone (NMP) as a solvent to prepare a positive electrode slurry (solid content 60.0 wt%). The positive electrode slurry was applied and dried on a positive electrode current collector (Al thin film) with a thickness of 13.5 $\mu$m, and then roll-pressing was performed to manufacture a positive electrode.

A negative electrode active material (graphite: SiO = 94:6 weight ratio), a binder (SBR-CMC) and a conductive material (carbon black) were added at a weight ratio of 97.7:0.8:1.5 to water as a solvent to prepare a negative electrode slurry (solid content: 60 wt%). The negative electrode slurry was applied and dried on a negative electrode current collector (copper (Cu) thin film) with a thickness of 6 $\mu$m, and then roll-pressing was performed to manufacture a negative electrode.

A porous separator polypropylene was interposed between the manufactured positive electrode and the negative electrode to manufacture an electrode assembly. Then, the electrode assembly was accommodated in a battery housing, and the prepared electrolyte for a lithium secondary battery was injected to manufacture a lithium secondary battery.

### Example 2.

### (Production of Non-Aqueous Electrolyte)

The LiPF$_6$ was dissolved to 1.0 M in an organic solvent obtained by mixing ethylene carbonate (EC), CFH$_2$CFCFH$_2$, and ethyl methyl carbonate (EMC) at a volume ratio of 30:40:30, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

**Example 3.**

**(Production of Non-Aqueous Electrolyte)**

The $LiPF_6$ was dissolved to 1.0 M in an organic solvent obtained by mixing ethylene carbonate (EC), $CFH_2CFCFH_2$, and ethyl methyl carbonate (EMC) at a volume ratio of 30:10:60, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

**Example 4.**

**(Production of Non-Aqueous Electrolyte)**

The $LiPF_6$ was dissolved to 1.0 M in an organic solvent obtained by mixing ethylene carbonate (EC), $CFH_2CFCFH_2$, and ethyl methyl carbonate (EMC) at a volume ratio of 30:60:10, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

**Example 5.**

**(Production of Non-Aqueous Electrolyte)**

The $LiPF_6$ was dissolved to 1.0 M in an organic solvent obtained by mixing ethylene carbonate (EC), $CFH_2CFCFH_2$, and ethyl methyl carbonate (EMC) at a volume ratio of 30:6:65, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

**Comparative Example 1.**

**(Production of Non-Aqueous Electrolyte)**

The $LiPF_6$ was dissolved to 1.0 M in an organic solvent obtained by mixing ethylene carbonate (EC) and ethyl methyl carbonate (EMC) at a volume ratio of 30:70, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

**Comparative Example 2.**

**(Production of Non-Aqueous Electrolyte)**

The LiPF$_6$ was dissolved to 1.0 M in an organic solvent obtained by mixing CFH$_2$CFCFH$_2$ and ethyl methyl carbonate (EMC) at a volume ratio of 20:80, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

**Comparative Example 3.**

**(Production of Non-Aqueous Electrolyte)**

The LiPF$_6$ was dissolved to 1.0 M in an organic solvent obtained by mixing ethylene carbonate (EC), 1,1,1-trifluoropropane, and ethyl methyl carbonate (EMC) at a volume ratio of 30:20:50, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

**Comparative Example 4**

**(Production of Non-Aqueous Electrolyte)**

The LiPF$_6$ was dissolved to 1.0 M in an organic solvent obtained by mixing ethylene carbonate (EC), 1,1,2-trifluoropropane, and ethyl methyl carbonate (EMC) at a volume ratio of 30:20:50, and then vinylene carbonate (VC) as an additive was added to 0.5 wt% to prepare a non-aqueous electrolyte (see Table 1 below).

**(Manufacturing of Secondary Battery)**

A lithium secondary battery was manufactured in the same manner as in Example 1 except that the non-aqueous electrolyte for the lithium secondary battery, which was prepared above, was used.

[Table 1] Non-aqueous electrolyte composition

| | Lithium salt | | Solvent | | | | Additive | |
|---|---|---|---|---|---|---|---|---|
| | Type | Concentration | First solvent | Second solvent | Third solvent | Composition ratio (Volume ratio) | Type | Content |
| Example 1 | LiPF$_6$ | 1.0 M | CFH$_2$CFCFH$_2$ | EC | DMC | 20: 30 : 50 | VC | 0.5 |
| Example 2 | LiPF$_6$ | 1.0 M | CFH$_2$CFCFH$_2$ | EC | DMC | 40 : 30 : 30 | VC | 0.5 |
| Example 3 | LiPF$_6$ | 1.0 M | CFH$_2$CFCFH$_2$ | EC | DMC | 10: 30 : 60 | VC | 0.5 |
| Example 4 | LiPF$_6$ | 1.0 M | CFH$_2$CFCFH$_2$ | EC | DMC | 60 : 30 : 10 | VC | 0.5 |
| Example 5 | LiPF$_6$ | 1.0 M | CFH$_2$CFCFH$_2$ | EC | DMC | 5 : 30 : 60 | VC | 0.5 |

(continued)

| | Lithium salt | | Solvent | | | | Additive | |
|---|---|---|---|---|---|---|---|---|
| | Type | Concentration | First solvent | Second solvent | Third solvent | Composition ratio (Volume ratio) | Type | Content |
| Comp. Example 1 | $LiPF_6$ | 1.0 M | - | EC | DMC | 0 : 30 : 70 | VC | 0.5 |
| Comp. Example 2 | $LiPF_6$ | 1.0 M | $CFH_2CFCFH_2$ | - | DMC | 20 : 0 : 80 | VC | 0.5 |
| Comp. Example 3 | $LiPF_6$ | 1.0 M | 1,1,1-trifluoropropane | EC | DMC | 20 : 30 : 50 | VC | 0.5 |
| Comp. Example 4 | $LiPF_6$ | 1.0 M | 1,1,2-trifluoropropane | EC | DMC | 20 : 30 : 50 | VC | 0.5 |

**[Experimental Example]**

**Experimental Example 1. Evaluation of high temperature capacity characteristics or storage characteristics**

The lithium secondary batteries manufactured in Examples and Comparative Examples were subjected to an activation (formation) process under the condition of charging at a rate of 0.2 C for 3 h, and then charging (0.05 C cut-off) was performed to 4.2 V at 25 °C at a rate of 0.33 C under constant current/constant voltage conditions. The batteries were fully charged to SOC 100%, and were stored at a high temperature (60 °C) for 16 weeks.

At the initial charging/discharging, after the capacity was checked at room temperature, the battery was charged to SOC 50 on the basis of the discharging capacity, and was discharged for 10 sec at a current of 2.5 C. The resistance was measured by the difference in voltage drop at this time and was used as the initial resistance. After 16 weeks of storage at 60 °C, the resistance was measured using the same method, and was used as the final resistance. Then, the resistance increase rate was calculated using the following equation I. The results are noted in Table 2 below.

Resistance increase rate (%) = (final resistance - initial resistance) / (initial resistance) $\times$ 100          [Equation I]

**Experimental Example 2. Evaluation of high temperature gas generation**

The lithium secondary batteries manufactured in Examples and Comparative Examples were subjected to an activation (formation) process under the condition of charging at a rate of 0.2 C for 3 h, and then charging (0.05 C cut-off) was performed to 4.2 V at 25 °C at a rate of 0.33 C under constant current/constant voltage conditions. The batteries were fully charged to SOC 100%, and were stored at a high temperature (60 °C) for 16 weeks. Then, the gas generation amount was analyzed, and a value relative to the gas generation amount of the non-aqueous electrolyte of Comparative Example 1 was calculated using the following equation II. The results are noted in Table 2 below.

Gas generation amount (%) = {gas generation amount/ gas generation amount of Comparative Example 1} $\times$ 100          [Equation II]

[Table 2]

| | Resistance increase rate (%) | Gas generation amount (%) |
|---|---|---|
| Example 1 | 3.21 | 85.88 |
| Example 2 | 1.22 | 81.84 |
| Example 3 | 6.96 | 92.51 |

(continued)

|  | Resistance increase rate (%) | Gas generation amount (%) |
|---|---|---|
| Example 4 | 16.11 | 94.81 |
| Example 5 | 19.55 | 95.39 |
| Comparative Example 1 | 36.66 | 100 |
| Comparative Example 2 | 68.79 | 114.7 |
| Comparative Example 3 | 60.44 | 103.75 |
| Comparative Example 4 | 48.69 | 103.17 |

Referring to Table 2 above, it may be found that in the case of lithium secondary batteries of Examples 1 to 5, the resistance increase rate is significantly reduced at high temperatures, and the gas generation amount is significantly reduced, compared to in lithium secondary batteries of Comparative Examples 1 to 4.

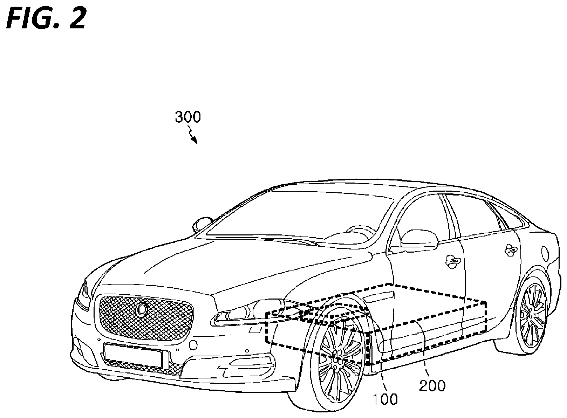

FIG. 2 is a view for explaining a vehicle 300 including a battery pack 200 composed of the lithium secondary batteries 100 of FIG. 1.

Referring to FIG. 2, the vehicle 300 according to one embodiment of the present disclosure may be, for example, an electric vehicle, a hybrid vehicle or a plug-in hybrid vehicle, and includes the battery pack 200 composed of the lithium secondary batteries 100 according to one embodiment of the present disclosure. The vehicle 300 includes a four-wheeled automobile and a two-wheeled automobile. The vehicle 300 operates when power is supplied from the battery pack 200 according to one embodiment of the present disclosure.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1.  A non-aqueous electrolyte comprising a lithium salt, an organic solvent, and an additive,

    wherein the organic solvent includes a first organic solvent and a second organic solvent,
    the first organic solvent is $CFH_2CFHCFH_2$, and
    the second organic solvent is a cyclic carbonate-based organic solvent.

2.  The non-aqueous electrolyte according to claim 1, wherein the first organic solvent is included in an amount of 5 vol% to 40 vol% relative to the organic solvent as a whole.

3.  The non-aqueous electrolyte according to claim 1, wherein the second organic solvent is included in an amount of 5 vol% to 40 vol% relative to the organic solvent as a whole.

4.  The non-aqueous electrolyte according to claim 1, wherein the cyclic carbonate-based organic solvent is ethylene carbonate or propylene carbonate.

5.  The non-aqueous electrolyte according to claim 1, wherein the organic solvent further includes a third organic solvent, and
    the third organic solvent is a linear carbonate-based organic solvent.

6.  The non-aqueous electrolyte according to claim 5, wherein the linear carbonate-based organic solvent is at least one type selected from dimethyl carbonate, diethyl carbonate, and ethylmethyl carbonate.

7.  The non-aqueous electrolyte according to claim 1, wherein the lithium salt includes $LiPF_6$.

8.  The non-aqueous electrolyte according to claim 1, wherein the additive is at least one selected from a cyclic carbonate-based compound, a halogen substituted carbonate-based compound, a sultone-based compound, a sulfate-based compound, a phosphate-based compound, a borate-based compound, a nitrile-based compound, a benzene-based compound, an amine-based compound, a silane-based compound and a lithium salt-based compound.

9. The non-aqueous electrolyte according to claim 8, wherein the additive additionally includes a combination of vinylene carbonate (VC), 1,3-propane sultone (PS), and 1,3-propene sultone (PRS).

10. A lithium secondary battery comprising:

   a positive electrode;
   a negative electrode facing the positive electrode;
   a separator interposed between the positive electrode and the negative electrode; and
   the non-aqueous electrolyte according to claim 1.

11. The lithium secondary battery according to claim 10, wherein the positive electrode includes lithium nickel cobalt manganese-based oxide as a positive electrode active material.

12. The lithium secondary battery according to claim 10, wherein the negative electrode includes SiOx (0<x<2) or SiC as a negative electrode active material.

13. A method of manufacturing a non-aqueous electrolyte that includes a lithium salt, an organic solvent and an additive, the method comprising:

   preparing the organic solvent with a first organic solvent and a second organic solvent,
   wherein the first organic solvent uses $CFH_2CFHCFH_2$, and
   the second organic solvent uses a cyclic carbonate-based organic solvent.

14. The method according to claim 13, wherein the first organic solvent is included in an amount of 5 vol% to 40 vol% relative to the organic solvent as a whole.

15. The method according to claim 13, wherein the second organic solvent is included in an amount of 5 vol% to 40 vol% relative to the organic solvent as a whole.

16. The method according to claim 13, wherein the cyclic carbonate-based organic solvent uses ethylene carbonate or propylene carbonate.

17. The method according to claim 13, wherein the organic solvent further includes a third organic solvent, and the third organic solvent uses a linear carbonate-based organic solvent.

18. The method according to claim 17, wherein as for the linear carbonate-based organic solvent, at least one type is selected from dimethyl carbonate, diethyl carbonate, and ethyl methyl carbonate.

FIG. 1

# FIG. 2

## INTERNATIONAL SEARCH REPORT

| International application No. |
| --- |
| **PCT/KR2025/005822** |

| A. | CLASSIFICATION OF SUBJECT MATTER |
| --- | --- |

**H01M 10/0569**(2010.01)i; **H01M 10/0567**(2010.01)i; **H01M 10/42**(2006.01)i; **H01M 10/052**(2010.01)i; **H01M 4/525**(2010.01)i; **H01M 4/505**(2010.01)i; **H01M 4/48**(2010.01)i; **H01M 4/587**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 10/0569(2010.01); H01G 11/60(2013.01); H01G 11/62(2013.01); H01M 10/052(2010.01); H01M 10/0567(2010.01); H01M 10/0568(2010.01); H01M 10/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비수전해질(nonaqueous electrolyte), 리튬이차전지(lithium-ion battery), 양극 (anode), 음극(cathode), 환형카보네이트(cyclic carbonate), 선형카보네이트(linear carbonate)

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 2017-091806 A (ASAHI KASEI CORP.) 25 May 2017 (2017-05-25)<br>claims 1, 4; paragraphs [0016]-[0018], [0024], [0028], [0030], [0035]; examples 1, 2 | 1-18 |
| Y | TAKIZAWA, K. et al. Burning velocity measurements of fluoropropanes by the spherical-vessel method. Journal of Fluorine Chemistry. 2008, vol. 129, pp. 713-719.<br>abstract | 1-18 |
| A | KR 10-2022-0156976 A (SOUTH 8 TECHNOLOGIES, INC.) 28 November 2022 (2022-11-28)<br>claims 1-5 | 1-18 |
| A | KR 10-2015-0114460 A (NOVOLYTE TECHNOLOGIES, INC.) 12 October 2015 (2015-10-12)<br>claims 1-15 | 1-18 |
| A | JP 09-293533 A (MITSUBISHI CHEMICAL CORP.) 11 November 1997 (1997-11-11)<br>claim 1 | 1-18 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 July 2025** | **30 July 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/005822**

| Patent document cited in search report | | | Publication date (day/month/year) | Patent family member(s) | | | Publication date (day/month/year) |
|---|---|---|---|---|---|---|---|
| JP | 2017-091806 | A | 25 May 2017 | None | | | |
| KR | 10-2022-0156976 | A | 28 November 2022 | CN | 114450768 | A | 06 May 2022 |
| | | | | CN | 114450768 | B | 16 December 2022 |
| | | | | CN | 114503325 | A | 13 May 2022 |
| | | | | CN | 114503325 | B | 02 December 2022 |
| | | | | CN | 115719829 | A | 28 February 2023 |
| | | | | EP | 4038651 | A1 | 10 August 2022 |
| | | | | EP | 4038685 | A1 | 10 August 2022 |
| | | | | JP | 2022-545132 | A | 25 October 2022 |
| | | | | JP | 2022-548332 | A | 17 November 2022 |
| | | | | JP | 2023-093442 | A | 04 July 2023 |
| | | | | JP | 7253861 | B2 | 07 April 2023 |
| | | | | JP | 7541764 | B2 | 29 August 2024 |
| | | | | JP | 7640824 | B2 | 06 March 2025 |
| | | | | KR | 10-2022-0051018 | A | 25 April 2022 |
| | | | | KR | 10-2022-0051019 | A | 25 April 2022 |
| | | | | KR | 10-2023-0035465 | A | 13 March 2023 |
| | | | | KR | 10-2469457 | B1 | 22 November 2022 |
| | | | | KR | 10-2508004 | B1 | 09 March 2023 |
| | | | | KR | 10-2798900 | B1 | 22 April 2025 |
| | | | | US | 10873070 | B2 | 22 December 2020 |
| | | | | US | 11049668 | B2 | 29 June 2021 |
| | | | | US | 11088396 | B2 | 10 August 2021 |
| | | | | US | 2020-0203703 | A1 | 25 June 2020 |
| | | | | US | 2021-098204 | A1 | 01 April 2021 |
| | | | | US | 2021-098829 | A1 | 01 April 2021 |
| | | | | WO | 2021-066975 | A1 | 08 April 2021 |
| | | | | WO | 2021-066976 | A1 | 08 April 2021 |
| | | | | WO | 2021-071542 | A1 | 15 April 2021 |
| KR | 10-2015-0114460 | A | 12 October 2015 | CN | 104981934 | A | 14 October 2015 |
| | | | | CN | 104981934 | B | 08 June 2018 |
| | | | | EP | 2917957 | A1 | 16 September 2015 |
| | | | | EP | 2917957 | B1 | 08 August 2018 |
| | | | | JP | 2015-534254 | A | 26 November 2015 |
| | | | | JP | 6177339 | B2 | 09 August 2017 |
| | | | | US | 2014-0134501 | A1 | 15 May 2014 |
| | | | | WO | 2014-074118 | A1 | 15 May 2014 |
| JP | 09-293533 | A | 11 November 1997 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240057211
- KR 1020250055788